# EUROPÄISCHE PATENTSCHRIFT

(11) **EP 0 700 148 B1**
(45) Veröffentlichungstag und Bekanntmachung des Hinweises auf die Patenterteilung: **13.01.1999**
(21) Anmeldenummer: 94116363.6
(22) Anmeldetag: 18.10.1994
(51) Int. Cl.: H02P 3/06

(54) **Bremsschaltung für Universalmotoren**
Braking circuit for universal motors
Circuit de freinage pour moteurs universels

(30) Priorität: 31.08.1994 DE 4244805
(43) Veröffentlichungstag der Anmeldung: 06.03.1996
(73) Patentinhaber: HEINRICH KOPP AG, D-63796 Kahl (DE)
(72) Erfinder: Schröcker, Rainer, D-71229 Leonberg (DE)
(74) Vertreter: Reinhard - Skuhra - Weise & Partner

(56) Entgegenhaltungen:
- DE-A- 3 539 841
- DE-A- 4 201 023
- FR-A- 2 586 608

## Beschreibung

Aus der DE-OS 35 39 841 ist eine gattungsgemäße Schaltungsanordnung zum netzunabhängigen Bremsen des Antriebsmotors von Elektrowerkzeugen bekannt. Der Antriebsmotor ist ein Universalmotor mit einem mit einem Kollektor versehenen Anker und einer geteilten oder ungeteilten Feldwicklung. Damit bei gegebener Laufrichtung im Motorbetrieb ein elektrisches Bremsen möglich ist, muß die Polarität der Zusammenschaltung von Anker und Feld für den Bremsbetrieb geändert werden. Die bekannte Schaltungsanordnung enthält zu diesem Zweck einen mehrpoligen Umschalter, der einerseits dazu verwendet wird die genannte Umpolung zu ermöglichen und der andererseits auch der elektrischen Abtrennung des Motors vom Netz dient.

Bei dieser Schaltung liegt die Feldwicklung an den Wechselkontakten des Umschalters. Es hat sich gezeigt, daß diese Zusammenschaltung beim Umschalten in den Bremsbetrieb einen sehr starken Kontaktabbrand verursacht, der bis zum Abbrennen des Schalters führen kann. Das vollständige Abbrennen geschieht, wenn der enstehende Lichtbogen einen Kurzschluß zwischen den beiden feststehenden Kontakten des entsprechenden Kontaktsatzes erzeugt. Die Netzklemmen sind dann über den Anker miteinander verbunden. Der fließende Strom ist zu groß und läßt die Kontakte verbrennen.

Die Ursachen für dieses Verhalten sind noch nicht vollständig geklärt. Aber es hat den Anschein als würden die Induktivität der Netzzuleitung oder Ankerspannungen einen Lichtbogen an denjenigen Schalterkontakten begünstigen, die beim Umschalten in den Bremsbetrieb geöffnet werden und die nach den Abschalten des Motorbetriebs nur noch über den Anker mit dem Netz verbunden sind.

Aus der DE-A-42 01 023 ist es zwar bekannt die Feldwicklung so anzuordnen, daß beim Umschalten in den Bremsbetrieb die Feldwicklung in der Netzzuleitung bleibt. Ob aber dadurch eine Verminderung des Abschaltlichtbogens erzielt werden kann, ist in der Druckschrift nicht erwähnt.

Ausgehend hiervon ist es Aufgabe der Erfindung, eine Bremsschaltung zu schaffen, die weniger Kontaktabbrand an den Schalterkontakten zeigt.

Diese Aufgabe wird durch die Bremsschaltung mit den Merkmalen des Anspruches 1 gelöst.

Überraschenderweise wurde gefunden, daß durch die Vertauschung von Anker und Feldwicklung an den Schalterkontakten eine bessere Standzeit des Umschalters erreicht werden konnte. Dieser Umstand ist um so überraschender als die Feldwicklung eine verhältnismäßig große Induktivität aufweist, die beim Abschalten des Motorbetriebs zu der Induktivität der Netzzuleitung hinzukommt. Man sollte unter diesen Umständen einen noch kräftigeren Abschaltfunken oder Lichtbogen an den sich öffnenden Kontakten erwarten.

Im übrigen sind Weiterbildungen der Erfindung Gegenstand von Unteransprüchen.

In der Zeichnung sind Ausführungsbeispiele der erfindungsgemäßen Schaltungsanordnung zum Bremsen eines Universalmotors dargestellt. Es zeigen:
- Fig. 1: eine Bremsschaltung, bei der zur Regelung des Bremsmoments der Bremswiderstand in Serie mit der Feldwicklung und dem Anker liegt, und
- Fig. 2: eine Bremsschaltung, bei der zur Regelung des Bremsmoments zu der Feldwicklung ein Zweipol mit Z-Dioden-Charakteristik parallel geschaltet ist.

Die Figur zeigt eine netzunabhängige Widerstandsbremseinrichtung 1 für einen einen Anker 2 sowie eine geteilte oder ungeteilte Feldwicklung 3 aufweisenden Universalmotor 4, der sowohl im Motor- als auch im Generatorbetrieb im Hauptschluß arbeitet. Derartige Universalmotoren 4 werden zum Antrieb von handgeführten Elektrowerkzeugen, wie Kreissägen, Bohrmaschinen, Hobel, Fräsen, Winkelschleifern, Bandschleifern, Heckenscheren u.dgl. eingesetzt. Mittels eines zweipoligen Umschalters 5, der einen ersten Wechselkontakt 6, einen Zweiten Wechselkontakt 7, einen ersten Ruhekontakt 8, einen zweiten Ruhekontakt 9 sowie einen ersten Arbeitskontakt 11 und einen zweiten Arbeitskontakt 12 aufweist, ist der Universalmotor 4 wahlweise mit zwei Netzanschlußklemmen 13, 14 oder einem Widerstandsbremskreis 15 verbindbar. Die Figur zeigt die Ruhestellung des Umschalters 5, dessen Wechselkontakt 6 mit dem Ruhekontakt 8 einen Öffner und dessen Wechselkontakt 6 zusammen mit dem Arbeitskontakt 11 einen Schließer bildet. Für den Wechselkontakt 7 zusammen mit dem Ruhekontakt 9 und dem Arbeitskontakt 12 gilt sinngemäß das gleiche.

In der Ruhestellung ist der Universalmotor 4 in den Bremsbetrieb umgeschaltet und an den Widerstandsbremskreis 15 angeschlossen.

Von der Netzanschlußklemme 13 führt eine Verbindungsleitung 16 zu einem Anschluß 21 der Feldwicklung 3. Ihr anderer Anschluß 28 ist über eine Leitung 19 mit dem ersten Arbeitskontakt 11 verbunden, an den auch der zweite Ruhekontakt 9 angeschlossen ist. Der Anker 2 liegt mit seinen beiden Anschlüssen 17 und 18 an den beiden Wechselkontakten 6 und 7. Ferner ist eine Diode 23 zu dem ersten Wechselkontakt 6 und dem ersten Arbeitskontakt 11 parallelgeschaltet, wobei bei der gezeigten Polarität die Anode an dem Anschluß 17 des Ankers 2 liegt. Der zweite Arbeitskontakt 12 ist für den Motorbetrieb über eine Leitung 24 an die Netzanschlußklemme 14 angeklemmt.

Der Widerstandsbremskreis 15 enthält eine Speicherschaltung 25 sowie einen gesteuerten Bremswiderstand 26 und eine Steuerschaltung 27.

Die Speicherschaltung 25 besteht aus einer Diode 28, der ein Startkondensator 29 parallelgeschaltet ist. Die Diode 28 ist anodenseitig mit dem Anschluß 17 des Ankers 2 verbunden, während ihre Kathode mit der Kathode einer Gleichrichterdiode 31 verbunden ist, die anodenseitig über einen Vorwiderstand 30 an den zweiten Wechselkontakt 7 über eine Leitung 32 angeschaltet ist. Außerdem führt von der Kathode der Diode 28 eine Verbindungsleitung 33 zu dem Bremswiderstand 26, der einen ohmschen Bremswiderstand 34 enthält. Zu dem ohmschen Bremswiderstand 34 liegt ein N-Kanal-Mosfet 35 parallel sowie ein Stromfühlerwiderstand 36 in Serie. Das kalte Ende des Stromfühlerwiderstandes 36 bildet das Bezugspotential für die Steuerschaltung 27, die daran mit ihrem Anschluß 37 angeschaltet ist. Außerdem besteht eine Verbindung zwischen diesem Anschluß 37 und eine Leitung 38 zu dem ersten Ruhekontakt 8.

Die Steuerschaltung 27 weist einen Steuereingang 39 auf, der an die Sourceelektrode des Mosfet 35 angeklemmt ist sowie einen Steuerausgang 41, der mit dem Gate des Mosfet 35 in Verbindung steht. Die Steuerschaltung 27 steuert den Mosfet 35 so, daß der Strom durch den Stromfühlerwiderstand 36 einem bestimmten vorgegebenen Verlauf folgt, beispielsweise näherungsweise konstant ist. Dies kann dadurch geschehen, daß entweder der Mosfet 35 von der Steuerschaltung 27 kontinuierlich zunehmend aufgesteuert wird, so daß zu Beginn der Bremsung zunächst der gesamte Strom über den Festwiderstand 34 fließt, während er in Verlauf der Bremsung mehr und mehr auf den Mosfet 35 überwechselt, dessen effektiver Drain-Source-Widerstand gegen Ende des Bremszyklus zunehmend verkleinert wird. Die andere Möglichkeit besteht darin, mit der Steuerschaltung 27 den Mosfet 35 im Schalterbetrieb arbeiten zu lassen. Der Strom durch die Feldwicklung 3 und den Anker 2 kann dadurch ebenfalls konstant gehalten werden; er pendelt jedoch, je nach Schaltzustand des Mosfet 35, ständig zwischen dem Mosfet 35 und dem Festwiderstand 34 hin und her. Im Schalterbetrieb zeigt der Strom eine geringfügige Welligkeit. In beiden Fällen fließt aber im störungsfreien Bremsbetrieb ein ununterbrochener Strom durch die Feldwicklung 3 bzw. den Anker 2.

Um den Universalmotor 4 in Gang zu setzen, wird der Umschalter 5 in seine nicht gezeigte Arbeitsstellung gebracht. In dieser Arbeitsstellung kann ein Strom aus der Netzeingangsklemme 13 über die Leitung 16 zu dem Anschluß 21 der Feldwicklung 3 und von dort über den Anschluß 22, die Leitung 19 zu dem Arbeitskontakt 11 fließen. Da der Arbeitskontakt 11 in der Arbeitsstellung mit dem Wechselkontakt 6 in Berührung steht, fließt der Strom von hier aus über den Anschluß 17 des Ankers 2, den Anker 2, den Anschluß 18 zu dem zweiten Wechselkontakt 7 weiter. Von hier aus schließt sich der Stromkreis über den Arbeitskontakt 12 zu der Netzeingangsklemme 14. Gleichzeitig wird bei der entsprechenden Polarität über die Gleichrichterdiode 31 der Startkondensator 29 auf die Scheitelspannung der Netzwechselspannung aufgeladen.

Zum Beenden des Motorbetriebs wird der Umschalter 5 losgelassen, so daß er in die gezeigte Ruhestellung zurückkehren kann. Dadurch wird die Netzverbindung des Universalmotors 4 über den Arbeitskontakt 12 unterbrochen. Gleichzeitig wird die Polarität, mit der die Feldwicklung 3 mit dem Anker 2 verbunden ist, gewechselt, d.h. an dem Ankeranschluß 18 liegt im Bremsbetrieb der Feldwicklungsanschluß 22 und nicht der Feldwicklungsanschluß 21 wie im Motorbetrieb.

Sollte dabei zwischen den Kontakten des zweiten beweglichen Kontakts 7 und dem zweiten Arbeitskontakt 12 ein Öffnungsfunke entstehen, der bis zu dem zweiten Ruhekontakt 9 mitgenommen wird, wird der maximal fließende Strom durch die Impedanz der Feldwicklung 3 begrenzt. Bei Universalmotoren bis zu einer elektrischen Leistung von ca. 1500 W erfolgt hierdurch eine Begrenzung auf Werte die beispielsweise einen Leitungsschutzschalter für Niederspannung mit einem Nennwert von 16 A noch nicht auslösen können. Entsprechend wirkungsvoll ist der Umschalter 5 gegen vorzeitigen Abbrand geschützt.

Lediglich der Vollständigkeit halber ist nachstehend noch die sonstige Arbeisweise der Schaltungsanordnung im Bremsbetrieb erläutert:

Im gezeigten Bremsbetrieb entsteht nach dem Umschalten des Umschalters 5 ein Bremsstromkreis, der in Serie hintereinander enthält: die Feldwicklung 3, die Speicherschaltung 25, den Bremswiderstand 26, den ersten Ruhekontakt 8, den ersten Wechselkontakt 6, den Anker 2, den zweiten Wechselkontakt 7 und den zweiten Ruhekontakt 9. Von diesem geht die Leitung 19 zurück zu der Feldwicklung 3.

Der vorher im Netzbetrieb aufgeladene Startkondensator 29 kann sich nun über den Bremswiderstand 26 in den Bremskreis entladen, wobei ein entsprechender Strom durch die Feldwicklung 3 zwangsweise erzeugt wird, der die Selbsterregung des Universalmotors 4 im Bremsbetrieb einleitet. Die Steuerschaltung 27 erhält ihre Versorgungsspannung beispielsweise aus der an dem gesteuerten Widerstand 26 anfallenden Spannung mittels einer nicht im einzelnen gezeigten Verbindungsleitung. Sie steuert den Mosfet 35 so, daß, der Strom durch den Stromfühlerwiderstand 36 im wesentlichen konstant gehalten ist.

Sobald sich der Startkondensator 29 entladen hat, kommutiert der in Kreis fließende Bremsstrom auf die Diode 28.

Falls in Verlauf des Bremsbetriebes Störungen am Kollektor auftreten, die dort zu einer Erhöhung des Spannungsabfalls und/oder des Übergangswiderstandes führen, so würde der dort auftretende erhöhte Spannungsabfall zu einer vorzeitigen Entregung der Feldwicklung 3 führen. Ist die Störung nicht schnell genug beseitigt, würde alsbald die Selbsterregung zusammenbrechen und unter Umständen je nach den Magnetisierungsverhältnissen zum Zeitpunkt des Zusammenbruchs auch nicht wieder entstehen. Um diese Bedämpfung des Erregerkreises zu verhindern, ist die Diode 23 vorgesehen, die bei einer Erhöhung des Übergangswiderstandes am Kollektor einen entsprechenden Teil des Stromes, der sonst durch den Anker 2 fließt, übernimmt.

Die Polarität der Diode 23 ist so gewählt, daß sie im normalen Bremsbetrieb durch die entstehende Anker-EMK bzw. Ankerspannung in Sperrichtung beaufschlagt ist. Im störungsfreien Bremsbetrieb entfaltet sie auch keine Wirkung. Erst dann, wenn am Kollektor kurzfristige Unterbrechungen auftreten würden, kann der nun aus der Feldwicklung 3 fließende Strom auf die Diode 23 kommutieren, wodurch ein Zusammenbrechen der Felderregung verhindert wird, wenn die Störung am Kollektor hinreichend schnell verschwindet.

Sie verhindert so eine zusätzliche Bedämpfung des Erregerkreises, so daß über eine entsprechend längere Zeit ein ausreichender Erregerstrom durch die Feldwicklung 3 fließen kann, ohne daß es zu Aussetzern der Selbsterregung und damit der Bremsung führt.

Sobald die Störung am Kollektor beseitigt ist, was in der Regel nach Bruchteilen von Sekunden der Fall ist, kann der Strom wieder ordnungsgemäß fließen und die Selbsterregung wieder angefacht werden.

Im normalen Bremsbetrieb fließt der Strom in dem Bremskreis so, daß die Diode 23 in Sperrichtung gepolt ist. Lediglich dann, wenn Übergangswiderstände in dem Bremskreis zu einer zwangsweisen vorzeitigen Verminderung des Stroms in der Feldwicklung 3 führen würden, übernimmt die Diode 23 diesen Teil des Stroms durch die Feldwicklung 3, der nicht mehr über den Anker 3 fließen kann.

Obwohl die gezeigte Schaltung mit einem kontinuierlich gesteuerten Bremswiderstand in Gestalt des Mosfet 35 arbeitet, dem der Festwiderstand 34 parallel geschaltet ist, ist ohne weiteres zu sehen, daß die Vorteile der Beschaltung des Umschalters 5 auch bei Bremsschaltungen erreicht werden kann, die mit getakteten Halbleitern im Bremskreis arbeiten, ebenso wie Bremsschaltungen, die als Bremswiderstand einen NTC-Widerstand oder einen Festwiderstand enthalten.

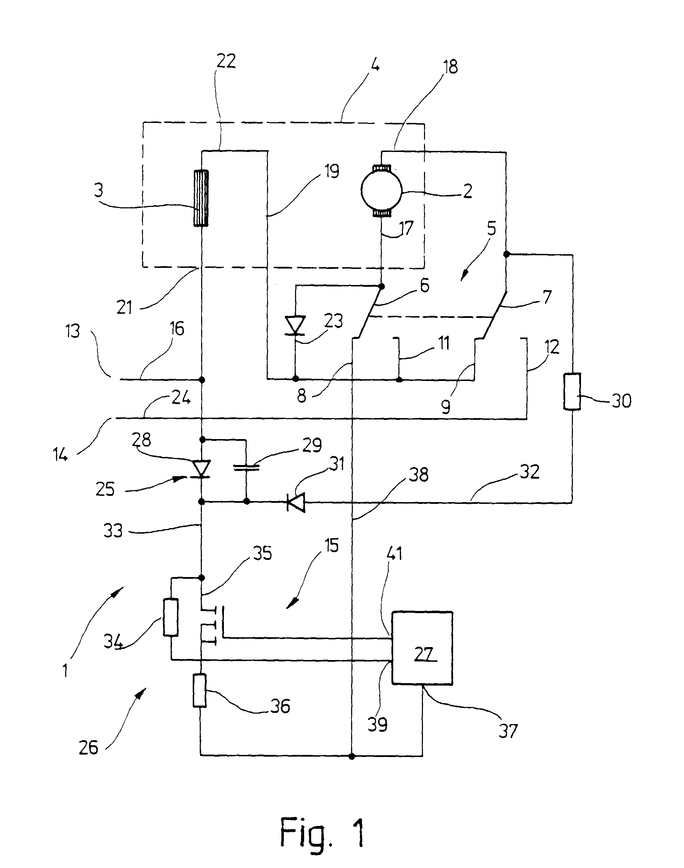

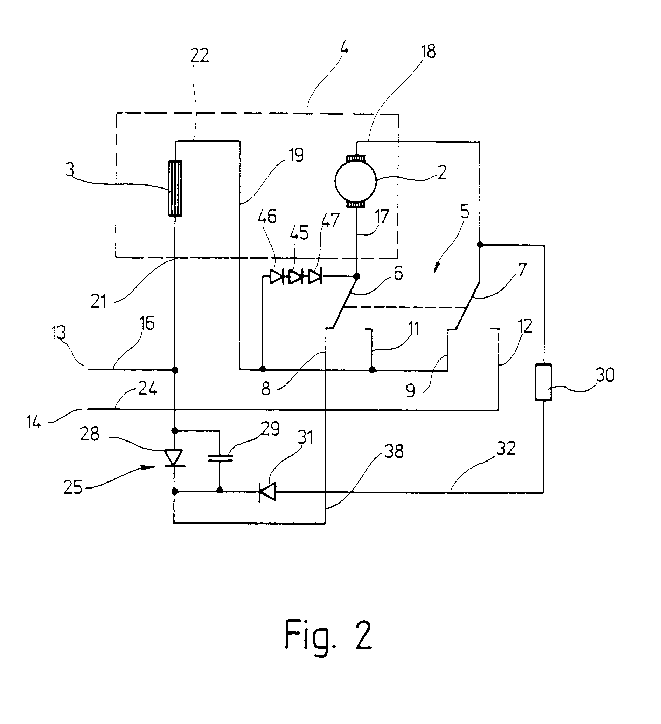

Fig. 2 zeigt ein anderes Ausführungsbeispiel der Bremsschaltung. Hierbei wird der Bremsstrom nicht, wie bei dem Ausführungsbeispiel nach Fig. 1, dadurch geregelt, daß in Serie mit der Feldwicklung ein gesteuerter Widerstand in Gestalt des Transistors 35 liegt, sondern es erfolgt eine Parallelregelung der Spannung an der Feldwicklung 3. Mit Hilfe dreier in Serie geschalteter Dioden 45, 46, 47 wird ein Zweipol mit Z-Dioden-Charakteristik erzeugt, der einenends an den beweglichen Kontakt 6 und anderenends an die Leitung 19 bzw. den zweiten Ruhekontakt 9 angeschlossen ist. Somit liegen im Bremsbetrieb die Dioden 45, 46, 47 zu dem Anker 2 und folglich auch zu der Feldwicklung 3 parallel. Die Bremsschaltung ist dadurch nicht, wie bei dem vorhergehenden Ausführungsbeispiel, stromgeregelt, sondern spannungsgeregelt, in der Weise, daß, die von dem Anker 2 abgegebene Spannung auf die Durchlaßspannung der Serienschaltung der drei Dioden 45, 46, 47 festgeklemmt ist. Hierdurch wird in der weiteren Folge die Spannung an der Feldwicklung festgelegt und damit die Erregung im Bremsbetrieb begrenzt.

Bei dieser Schaltungsvariante wird die kinetische Energie im wesentlichen im Innenwiderstand des Ankers 2 und zu einem geringeren Teil im Innenwiderstand der Feldwicklung 3 sowie der Z-Diode in Wärme umgesetzt.

Im übrigen arbeitet die Schaltung nach Fig. 2 so, wie dies im Zusammenhang mit der Schaltung nach Fig. 1 bereits beschrieben ist. Die übrigen Bauelemente, die die Schaltung nach den Fig. 1 und 2 gemeinsam haben, sind mit denselben Bezugszeichen versehen und haben dieselbe Funktion.

Bei einer Bremsschaltung für einen Universalmotor sind im Bremsbetrieb der Anker, die Feldwicklung und gegebenenfalls ein gesteuerter Bremswiderstand in Serie geschaltet. Außerdem ist eine Speicherschaltung vorhanden, die im Motorbetrieb nachgeladen wird und im Bremsbetrieb die gespeicherte elektrische Energie an die Feldwicklung abgibt, um die Selbsterregung mit einer bestimmten Polarität zu erzwingen.

Um den Abbrand an dem Umschalter zu minimieren ist der Anker an die Wechselkontakte angeschlossen.

## Patentansprüche

1. Schaltungsanordnung (1) zum netzunabhängigen Bremsen eines eine geteilte oder ungeteilte Feldwicklung (3) sowie einen Anker (2) aufweisenden Reihenschlußmotors (4),
mit einem wenigstens zweipoligen Umschalter (5), der einen ersten sowie einen zweiten Ruhekontakt (8, 9), einen ersten sowie einen zweiten Arbeitskontakt (11, 12) und einen ersten sowie einen zweiten beweglichen Kontakt (6, 7) aufweist,
wobei jeder bewegliche Kontakt (6, 7) zusammen mit dem zugehörigen Ruhekontakt (8, 9) einen Öffner und zusammen mit dem zugehörigen Arbeitskontakt (11, 12) einen Schließer bildet,
wobei der Anker (2) mit einem seiner beiden Anschlüsse (17, 18) an den ersten beweglichen Kontakt (6) angeschlossen ist, und
mit Mitteln (26), um im Bremsbetrieb die in dem Anker (2) enthaltene kinetischen Energie in Verlustwärme umzusetzen,
**dadurch gekennzeichnet**,
daß der Anker (2) mit seinem anderen Anschluß (18) an den zweiten beweglichen Kontakt (7) angeschlossen ist, und
die Feldwicklung (3) oder ein Teil der Feldwicklung (3) zum Unterdrücken gefährlicher Lichtbögen an Kontakten des zweipoligen Umschalters (5) mit einem ihrer Anschlüsse mit einer Netzklemme (13) verbunden ist und mit ihrem anderen Anschluß an den zweiten Ruhekontakt (9) sowie den ersten Arbeitskontakt (11) angeschlossen ist,
daß der zweite Arbeitskontakt (12) an eine zweite Netzklemme (14) angeschlossen ist, und daß Mittel (25) zum zwangsweisen Einleiten der Selbsterregung im Bremsbetrieb vorgesehen sind.

2. Schaltungsanordnung nach Anspruch 1, dadurch gekennzeichnet, daß die Mittel zum Erzeugen der Verlustwärme im Bremsbetrieb einen Bremswiderstand (26) enthalten.

3. Schaltungsanordnung nach Anspruch 2, dadurch gekennzeichnet, daß der Bremswiderstand (26) ein gesteuerter Bremswiderstand ist.

4. Schaltungsanordnung nach Anspruch 2, dadurch gekennzeichnet, daß der Bremswiderstand (26), ein NTC--Widerstand ist.

5. Schaltungsanordnung nach Anspruch 2, dadurch gekennzeichnet, daß der Bremswiderstand (26) ein Festwiderstand ist.

6. Schaltungsanordnung nach Anspruch 1 oder 2, dadurch gekennzeichnet, daß die Mittel zum Erzeugen der Verlustwärme im wesentlichen den Innenwiderstand des Ankers (2) umfassen.

7. Schaltungsanordnung nach Anspruch 1, dadurch gekennzeichnet, daß die Mittel zum zwangsweisen Einleiten der Selbsterregung ein Speicherschaltung (25) aufweisen.

8. Schaltungsanordnung nach Anspruch 7, dadurch gekennzeichnet, daß die Speicherschaltung (25) eine Parallelschaltung aus einem Startkondensator (29) sowie einer Diode (28) aufweist.

9. Schaltungsanordnung nach Anspruch 7, dadurch gekennzeichnet, daß die Speicherschaltung an diejenigen Netzklemmen angeschlossen ist, an der auch die Feldwicklung liegt.

10. Schaltungsanordnung nach Anspruch 2, dadurch gekennzeichnet, daß der erste Ruhekontakt (8) mit dem Bremswiderstand (26) verbunden ist.

11. Schaltungsanordnung nach Anspruch 7, dadurch gekennzeichnet, daß von dem zweiten Wechselkontakt (7) eine Ladeschaltung (31) zu der Speicherschaltung (25) führt.

12. Schaltungsanordnung nach Anspruch 1, dadurch gekennzeichnet, daß im Bremsbetrieb zu dem Anker (2) eine Spannungsbegrenzungsschaltung (45,46,47) parallel liegt.

## Claims

1. Circuit arrangement (1) for the off-the-line braking of a series-wound motor (4) having a split or non-split field winding (3) and an armature (2),
having a change-over switch (5) which has at least two poles, a first and a second break contact (8, 9), a first and a second make contact (11, 12) and a first and a second change-over contact (6, 7),
each change-over contact (6, 7) forming a normally closed contact together with the associated break contact (8, 9) and forming a normally open contact together with the associated make contact (11, 12),
the armature (2) being connected to the first change-over contact (6) via one of its two terminals (17, 18) and
having means (26) for converting the kinetic energy contained in the armature (2) into heat loss during braking operation,
characterised in that
the armature (2) is connected to the second change-over contact (7) via its other terminal (18) and
the field winding (3) or a portion of the field winding (3) is connected to a supply terminal (13) via one of its terminals to suppress dangerous arcs at contacts of the change-over switch (5) having two poles and is connected to the second break contact (9) and the first make contact (11) via its other terminal,
in that the second make contact (12) is connected to a second supply terminal (14) and in that means (25) are provided for the forced initiation of self-excitation during braking operation.

2. Circuit arrangement according to claim 1, characterised in that the means for producing the heat loss during braking operation contain a braking resistor (26).

3. Circuit arrangement according to claim 2, characterised in that the braking resistor (26) is a controlled braking resistor.

4. Circuit arrangement according to claim 2, characterised in that the braking resistor (26) is an NTC resistor.

5. Circuit arrangement according to claim 2, characterised in that the braking resistor (26) is a fixed resistor.

6. Circuit arrangement according to claim 1 or 2, characterised in that the means for producing the heat loss substantially comprise the inner resistor of the armature (2).

7. Circuit arrangement according to claim 1, characterised in that the means for the forced initiation of self-excitation have a storage circuit (25).

8. Circuit arrangement according to claim 7, characterised in that the storage circuit (25) has a parallel connection comprising a starter capacitor (29) and a diode (28).

9. Circuit arrangement according to claim 7, characterised in that the storage circuit is connected to those supply terminals to which the field winding is also connected.

10. Circuit arrangement according to claim 2, characterised in that the first break contact (8) is connected to the braking resistor (26).

11. Circuit arrangement according to claim 7, characterised in that a charging circuit (31) extends from the second change-over contact (7) to the storage circuit (25).

12. Circuit arrangement according to claim 1, characterised in that, during braking operation, a voltage limiting circuit (45, 46, 47) is parallel with the armature (2).

## Revendications

1. Dispositif de circuit (1) pour le freinage indépendant du secteur d'un moteur-série présentant un enroulement de champ (3) divisé ou non divisé et un induit (2), comprenant un inverseur (5) au moins bipolaire, qui présente un premier et un deuxième contact de repos (8, 9), un premier et un deuxième contact de travail (11, 12) ainsi qu'un premier et un deuxième contact mobile (6, 7), chaque contact mobile (6, 7) formant avec le contact de repos spécifique (8, 9) un rupteur et avec le contact de travail spécifique (11, 12) un contact de fermeture, l'induit (2) étant raccordé avec l'un de ses deux branchements (17, 18) au premier contact mobile (6), et comprenant des moyens (26), pour convertir en mode freinage l'énergie cinétique contenue dans l'induit (2) en chaleur perdue, caractérisé en ce que l'induit (2) est raccordé avec son autre branchement (18) au deuxième contact mobile (7), et l'enroulement de champ (3) ou une partie de l'enroulement de champ (3) est relié avec l'un de ses branchements à une borne de secteur (13) pour supprimer des arcs dangereux sur des contacts de l'inverseur (5) bipolaire et est raccordé avec son autre branchement au deuxième contact de repos (9) et au premier contact de travail (11), en ce que le deuxième contact de travail (12) est raccordé à une deuxième borne de secteur (14), et en ce que des moyens (25) sont prévus pour l'amorçage forcé de l'auto-excitation en mode freinage.

2. Dispositif de circuit selon la revendication 1, caractérisé en ce que les moyens pour produire la chaleur perdue en mode freinage contiennent une résistance de freinage (26).

3. Dispositif de circuit selon la revendication 2, caractérisé en ce que la résistance de freinage (26) est une résistance de freinage contrôlée.

4. Dispositif de circuit selon la revendication 2, caractérisé en ce que la résistance de freinage (26) est une résistance NTC.

5. Dispositif de circuit selon la revendication 2, caractérisé en ce que la résistance de freinage (26) est une résistance fixe.

6. Dispositif de circuit selon la revendication 1 ou 2, caractérisé en ce que les moyens pour produire la chaleur perdue comprennent essentiellement la résistance intérieure de l'induit (2).

7. Dispositif de circuit selon la revendication 1, caractérisé en ce que les moyens pour le déclenchement forcé de l'auto-excitation présentent un circuit mémoire (25).

8. Dispositif de circuit selon la revendication 7, caractérisé en ce que le circuit mémoire (25) présente un circuit parallèle composé d'un condensateur d'amorçage (29) et d'une diode (28).

9. Dispositif de circuit selon la revendication 7, caractérisé en ce que le circuit mémoire est raccordé aux bornes de secteur, sur lesquelles se situe également l'enroulement de champ.

10. Dispositif de circuit selon la revendication 2, caractérisé en ce que le premier contact de repos (8) est relié à la résistance de freinage (26).

11. Dispositif de circuit selon la revendication 7, caractérisé en ce qu'un circuit de charge (31) va du deuxième contact inverseur (7) au circuit mémoire (25).

12. Dispositif de circuit selon la revendication 1, caractérisé en ce qu'un circuit de limitation de tension (45, 46, 47) est monté en parallèle avec l'induit (2) en mode freinage.
